# EUROPEAN PATENT SPECIFICATION

(11) **EP 4 022 970 B1**
(45) Date of publication and mention of the grant of the patent: **28.10.2026**
(21) Application number: 20873227.1
(22) Date of filing: 29.09.2020
(51) Int. Cl.: H04W 36/00, H04W 36/08, H04W 8/24, H04W 36/18

(54) **CAPABILITY COORDINATION FOR MOBILITY WITH DAPS**
KAPAZITÄTSKOORDINATION FÜR MOBILITÄT MIT DAPS
COORDINATION DE CAPACITÉ POUR MOBILITÉ AVEC DAPS

(30) Priority: 04.10.2019 IN 201931040209; 28.09.2020 GB 202015298
(43) Date of publication of application: 06.07.2022
(73) Proprietor: Samsung Electronics Co., Ltd., Suwon-si, Gyeonggi-do 16677 (KR)
(72) Inventor: VAN DER VELDE, Himke, Staines Middlesex TW18 4QE (GB); INGALE, Mangesh Abhimanyu, Bangalore 560037 (IN); LATHEEF, Fasil Abdul, Bangalore 560037 (IN); KIM, Soenghun, Suwon-si Gyeonggi-do 16677 (KR)
(74) Representative: Gulde & Partner
(86) International application number: PCT/KR2020/013316
(87) International publication number: WO 2021/066511

(56) References cited:
- US-A1- 2018 098 250
- US-A1- 2019 253 945
- QUALCOMM INCORPORATED ET AL: "UE capability co-ordination signalling aspects for DAPS based enhanced MBB HO", vol. RAN WG2, no. Prague, Czech Republic; 20190826 - 20190830, 16 August 2019 (2019-08-16), pages 1 - 6, XP051767668, Retrieved from the Internet <URL:http://www.3gpp.org/ftp/tsg_ran/WG2_RL2/TSGR2_107/Docs/R2-1909877.zip> [retrieved on 20190816]
- QUALCOMM INCORPORATED, MEDIATEK INC, INTEL CORPORATION, CHARTER COMMUNICATIONS: "UE capability co-ordination signalling aspects for DAPS based enhanced MBB HO", 3GPP DRAFT; R2-1909877_UE CAPABILITY CO-ORDINATION SIGANLING FOR DAPS EMBB HO _V4_CLEAN, vol. RAN WG2, 16 August 2019 (2019-08-16), Prague, Czech Republic, pages 1 - 6, XP051767668
- QUALCOMM INCORPORATED, INTEL CORPORATION, CHARTER COMMUNICATIONS: "UE capability sharing aspects for DAPS based enhanced MBB HO", 3GPP DRAFT; R2-1909875_UE CAPABILITY SHARING ASPECTS FOR DAPS BASED EMBB HO _V3_CLEAN, vol. RAN WG2, 16 August 2019 (2019-08-16), Prague, Czech Republic, pages 1 - 7, XP051767666
- OPPO: "Further considerations on capability coordination", 3GPP DRAFT; R2-1912506- FURTHER CONSIDERATIONS ON CAPABILITY COORDINATION, vol. RAN WG2, 3 October 2019 (2019-10-03), Chongqing, China, pages 1 - 2, XP051790549
- VIVO: "Capability coordination between the source and target node", 3GPP DRAFT; R2-1909778 CAPABILITY COORDINATION BETWEEN THE SOURCE AND THE TARGET, vol. RAN WG2, 16 August 2019 (2019-08-16), Prague, Czech Republic, pages 1 - 3, XP051767573

## Description

### [Technical Field]

The disclosure relates to controlling networks, such as cellular networks. More particularly, the disclosure relates to dual active protocol stack (DAPS) handover.

### [Background Art]

Considering the development of wireless communication from generation to generation, the technologies have been developed mainly for services targeting humans, such as voice calls, multimedia services, and data services. Following the commercialization of 5^{th} generation (5G) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6^{th} generation (6G) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multi antenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems a full-duplex technology for enabling an uplink transmission and a downlink transmission to simultaneously use the same frequency resource at the same time, a network technology for utilizing satellites, high-altitude platform stations (HAPS), and the like in an integrated manner, an improved network structure for supporting mobile base stations and the like and enabling network operation optimization and automation and the like, a dynamic spectrum sharing technology via collision avoidance based on a prediction of spectrum usage, an use of artificial intelligence (AI) in wireless communication for improvement of overall network operation by utilizing AI from a designing phase for developing 6G and internalizing end-to-end AI support functions, and a next-generation distributed computing technology for overcoming the limit of user equipment (UE) computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. More particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

Cell handover latency in 4^{th} generation (4G) long term evolution (LTE) systems is typically 30 ms to 60 ms. Ultra-reliable, low-latency use cases for 5G, such as in transport and manufacturing, require cell handover latency to be reduced to is close to 0 ms as possible.

In more detail, 3^{rd} generation partnership project (3GPP) releases 16 and 17 introduce features to support use cases related to smart manufacturing, connected vehicles, electrical power distribution and even drones controlled by the network. In order to achieve these use cases, reduction in the handover interruption time or latency between cells in the 5G network is critically important.

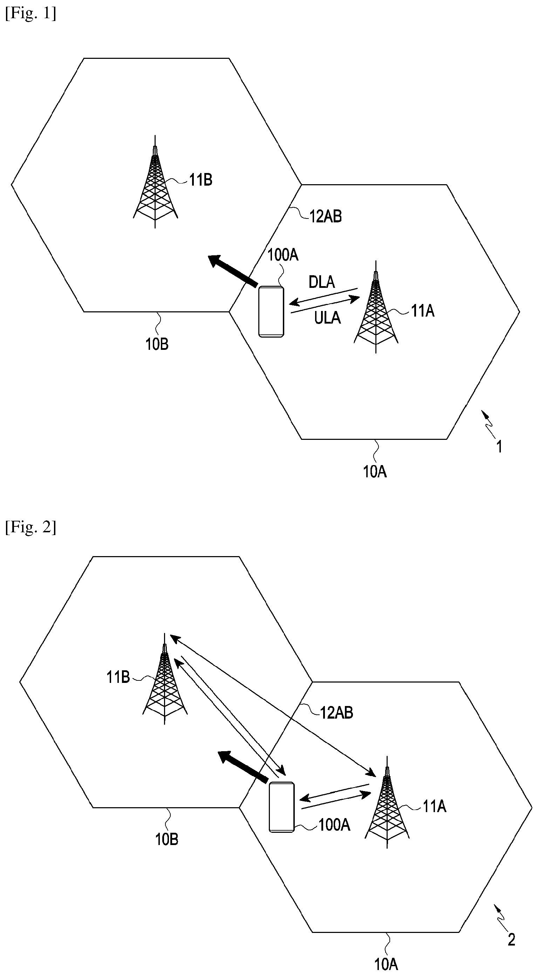

FIG. 1 schematically depicts a 5G network 1 and particularly, handover for a UE 100A moving from a source cell 10A, including a first base station (gNodeB) (gNB) 11A, to a target cell 10B, including a second gNB 11B, across a cell boundary 12AB of the related art. During the handover, there is a brief time (i.e., the interruption time or latency) during which the UE 100A cannot transmit or receive user data. The mobility interaction time may be defined as the shortest time duration supported by the 5G network 1 during handover.

The latency arises due to the UE 100A releasing the connection to the source cell 10A (i.e., the first gNB 11A) before the link to the target cell 10B (i.e., the second gNB 11B) is established. For example, the uplink transmission ULA and the downlink transmission DLA are finalised in the source cell 10A before the UE 100A starts to communicate with the second gNB 11B in the target cell 10B.

In order to reduce the latency, DAPS handover (also known as enhanced make-before-break handover) allows the connection to the source cell 10A to remain active for reception and transmission of user data until the UE 100A is able to receive and transmit user data in the target cell 10B. Hence, there is a need for the UE 100A to simultaneously receive and transmit user data in both the source cell 10A and the target cell 10B.

Therefore, there is a need to improve handover.

The above information is presented as background information only to assist with an understanding of the disclosure. No determination has been made, and no assertion is made, as to whether any of the above might be applicable as prior art with regard to the disclosure.

In a discussion paper to Qualcomm Incorporated et al., entitled "UE capability co-ordination signalling aspects for DAPS based enhanced MBB HO" and referred to as R2-1909877, submitted to the 3GPP TSG RAN WG2 Meeting #107, which took place in Prague, Czech Republic, Aug 26th - 30th, 2019, how to share UE capability between source and target eNB during DAPS based enhanced MBB HO was discussed in general.

### [Disclosure of Invention]

### [Solution to Problem]

The invention is defined by the appended claims. The description that follows is subjected to this limitation. Any disclosure lying outside the scope of said claims is only intended for illustrative as well as comparative purposes. Aspects of the disclosure are to address at least the above-mentioned problems and/or the disadvantages and to provide at least the advantages described below. Accordingly, an aspect of the disclosure is to provide a method and a network having a reduced latency during handover, compared with handover of the related art. For example, it is an aim of the disclosure to provide a method and a network having a more efficient and/or robust handover, compared with handover, for example while minimising complexity and/or reducing latency.

Another aspect of the disclosure is to provide a method of dual active protocol stack (DAPS), handover of a user equipment (UE), from a source base station (gNodeB) (gNB) to a target gNB. The method includes indicating, by the UE to the source gNB, UE capability information, including DAPS capabilities, coordinating, by the source gNB and/or the target gNB, a Dual Active Protocol Stack, DAPS handover request for the UE, based, at least in part, on the DAPS capabilities of the UE, and reconfiguring, by the source gNB and/or the target gNB, the UE from the source gNB to the target gNB.

Another aspect of the disclosure is to provide a network comprising a UE, a source gNB and a target gNB. The UE is arranged to indicate, to the source gNB, UE capability information, including DAPS capabilities, the source gNB and/or the target gNB are arranged to coordinate a DAPS handover request for the UE, based, at least in part, on the DAPS capabilities of the UE, and the source gNB and/or the target gNB is arranged to reconfigure the UE from the source gNB to the target gNB to thereby handover the UE from the source gNB to the target gNB.

Another aspect of the disclosure is to provide a UE according to the second aspect.

Another aspect of the disclosure is to provide a gNB, for example a source gNB or a target gNB, according to the second aspect.

Another aspect of the disclosure is to provide a method of DAPS, handover of a UE, from a source gNB to a target gNB. The method includes receiving, by the source gNB from the UE, UE capability information, including DAPS capabilities, coordinating, by the source gNB, a DAPS handover request for the UE, based, at least in part, on the DAPS capabilities of the UE, and reconfiguring, by the source gNB, the UE from the source gNB to the target gNB.

Another aspect of the disclosure is to provide a source gNB according to the fifth aspect.

According to the disclosure there is provided a method, as set forth in the appended claims. Also provided is a network. Other features of the disclosure will be apparent from the dependent claims, and the description that follows.

Additional aspects will be set forth in part in the description which follows and, in part, will be apparent from the description, or may be learned by practice of the presented embodiments.

In accordance with aspect of the disclosure, a method of DAPS, handover of a UE, from a source gNB to a target gNB is provided. The method includes indicating, by the UE to the source gNB, UE capability information, including DAPS capabilities, coordinating, by the source gNB and/or the target gNB, a Dual Active Protocol Stack, DAPS handover request for the UE, based, at least in part, on the DAPS capabilities of the UE, and reconfiguring, by the source gNB and/or the target gNB, the UE from the source gNB to the target gNB.

### Feature 1

In one example, coordinating, by the source gNB and/or the target gNB, the handover request for the UE includes establishing a capability coordination therebetween.

In one example, establishing the capability coordination between the source gNB and the target gNB includes adapting, by the source gNB, to the target gNB or adapting, by the target gNB, to the source gNB.

In one example, adapting, by the target gNB, to the source gNB includes indicating, by the source gNB to the target gNB, a source configuration and setting, by the target gNB, a target configuration based, at least in part, on the UE capability information and the source configuration, by using for the target configuration leftovers of the UE capabilities given what is taken by source gNB for the source configuration.

In one example, adapting, by the source gNB, to the target gNB includes indicating, by the target gNB, a configuration to be used thereby and using, by the source gNB, leftovers.

In one example, adapting, by the target gNB, to the source gNB includes providing, by the source gNB to the target gNB, one or more configuration options and selecting, by the target gNB, one of the provided configuration options.

### Feature 2

In one example, reconfiguring the UE from the source gNB to the target gNB involves three reconfiguration messages.

In one example, reconfiguring the UE from the source gNB to the target gNB includes transmitting, from the source gNB to the UE, a first reconfiguration message, for reducing UE capabilities required with respect to the source gNB.

In one example, the first reconfiguration message includes a field/bit indicating a delay for the UE to apply the received configuration.

In one example, reconfiguring the UE from the source gNB to the target gNB includes transmitting, from the source gNB to the UE, a second reconfiguration message, for reconfiguring the UE to initiate DAPS handover.

In one example, the second reconfiguration message includes an indication whether to apply DAPS operation, for example a field/bit specifying that the UE shall continue using a source configuration and/or to apply DAPS operation.

In one example, the second reconfiguration message includes a field/bit specifying that the UE shall apply a reduced source configuration and/or target configuration that the UE previously indicated as an option for supporting DAPS.

In one example, reconfiguring the UE from the source gNB to the target gNB includes transmitting, from the target gNB to the UE, a third reconfiguration message, for reconfiguring the UE to release a source configuration and to reconfigure the UE to apply a target configuration based, at least in part, on the UE capability information, for example to use the full UE capabilities for the target configuration such as including those previously required for operating the source connection.

In one example, the third reconfiguration message includes a field/bit specifying that the UE will release the source configuration.

### Feature 3

In one example, the method includes initiating, by the source gNB, fallback to normal or fallback to a mobile broadband (MBB) handover.

### Feature 4

In one example, the DAPS capabilities define supported configurations relative to a current or a specific configuration.

In one example, the DAPS capabilities are included in a ReconfigurationComplete message or in a multi-radio (MR) message.

In one example, the MR message indicates DAPS capabilities relative to the current source configuration and/or for the target, for which the MR was triggered.

### Feature 5

In one example, the DAPS capabilities include a per UE capability.

In one example, the DAPS capabilities include a per BC capability, for example wherein the per BC UE capability includes a DAPS capability either indicating DAPS support or that this BC support differs from the per UE DAPS capability.

In one example, the per BC DAPS capability includes an FSC indicating the DAPS capabilities.

In one example, the UE capability information includes a pattern for time division multiplexing (TDM) operation, for example wherein the UE includes and/or is a non-carrier aggregation/dual connectivity (CA/DC) capable UE.

The second aspect provides a network including a UE, a source gNB and a target gNB, wherein:
the UE is arranged to indicate, to the source gNB, UE capability information, including DAPS capabilities,
the source gNB and/or the target gNB are arranged to coordinate a Dual Active Protocol Stack, DAPS handover request for the UE, based, at least in part, on the DAPS capabilities of the UE, and
the source gNB and/or the target gNB is arranged to reconfigure the UE from the source gNB to the target gNB to thereby handover the UE from the source gNB to the target gNB.

The network, the source gNB and/or the target gNB maybe as described with respect to the first aspect and may be arranged, for example adapted, to implement any of the method steps as described with respect to the first aspect.

The third aspect provides a UE according to the second aspect.

The fourth aspect provides a gNB, for example a source gNB or a target gNB, according to the second aspect.

### Definitions

Throughout this specification, the term "comprising" or "comprises" means including the component(s) specified but not to the exclusion of the presence of other components. The term "consisting essentially of" or "consists essentially of" means including the components specified but excluding other components except for materials as impurities, unavoidable materials as a result of processes used to provide the components, and components added for a purpose other than achieving the technical effect of the disclosure, such as colorants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or embodiment of the disclosure, as set out herein are also applicable to all other aspects or embodiments of the disclosure, where appropriate. In other words, the skilled person reading this specification should consider the optional features for each aspect or embodiment of the disclosure as interchangeable and combinable between different aspects and embodiments.

Other aspects, advantages, and salient features of the disclosure will become apparent to those skilled in the art from the following detailed description, which, taken in conjunction with the annexed drawings, discloses various embodiments of the disclosure.

### [Brief Description of Drawings]

The above and other aspects, features, and advantages of certain embodiments of the disclosure will be more apparent from the following description taken in conjunction with accompanying drawings, in which:
FIG. 1 schematically depicts a network according to the related art;
FIG. 2 schematically depicts a network according to an embodiment of the disclosure;
FIG. 3 schematically depicts a method according to an embodiment of the disclosure;
FIG. 4 schematically depicts a method of FIG. 3, in more detail according to an embodiment of the disclosure;
FIG. 5 schematically depicts a method of FIG. 3, in more detail according to an embodiment of the disclosure;
FIG. 6 schematically depicts a method of FIG. 3, in more detail according to an embodiment of the disclosure; and
FIG. 7 schematically depicts a flow chart illustrating a method of dual active protocol stack (DAPS), handover of a user equipment (UE), from a source base station (gNodeB) (gNB) to a target gNB according to an embodiment of the disclosure.

Throughout the drawings, it should be noted that like reference numbers are used to depict the same or similar elements, features, and structures.

### [Mode for the Invention]

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

### Network

FIG. 1 schematically depicts a network 1 according to the related art. FIG. 2 schematically depicts a network 2 according to an embodiment of the disclosure.

Referring to FIGS. 1 and 2, the network 2 is generally as described with respect to the network 1 and like reference signs indicate like features.

In this example, the network 2 includes a user equipment (UE), 100A a source base station gNodeB (gNB) 11A and a target gNB 11B, wherein the UE 100A is arranged to indicate, to the source gNB 11A, UE capability information, including dual active protocol stack (DAPS) capabilities, the source gNB 11A and/or the target gNB 11B are arranged to coordinate a (DAPS) handover request for the UE 100A, based, at least in part, on the DAPS capabilities of the UE 100A, and the source gNB 11A and/or the target gNB 11B is arranged to reconfigure the UE 100A from the source gNB 11A to the target gNB 11B to thereby handover the UE 100A from the source gNB 11A to the target gNB 11B.

It should be understood that the network 2 includes a long term evolution (LTE), a NR or any other Radio Access Technology (RAT).

Briefly, the network 2 provides continued transmission and reception of user data in the source cell 10A by the UE 100A after receiving a handover request by simultaneous reception of user data by the UE 100A from the source cell 10A and the target cell 10B during handover.

In more detail, upon receiving a request from the network 2, for example from the source cell 10A, to perform DAPS handover (i.e., a handover with reduced interruption time), the UE 100A continues to transmit and receive user data in the source cell 10A. A new connection with the target cell 10B is established by the UE 100A and the UE 100A perform synchronisation and random access in the target cell 10B. The UE 100A establishes a new user play protocol stack for the target cell 10B, including PHY (Physical), MAC (Medium Access Control) and RLC (Radio Link Control) layers, while keeping also the source user plain protocol stack active for transmission and reception of user data in the source cell 10A.

The UE 100A may thus receive user data simultaneously from both the source cell 10A and the target cell 10B. Hence, the Packet Data Conversions Protocol (PDCP) layer is reconfigured to a common PDCP entity for the source use a plain protocol stack and the target user planning protocol stack. PDCP SN (Sequence Number) continuation is maintained during the handover procedure, to ensure in-sequence delivery of user data, for example provided by a reordering and implication function may be provided in the common PDCP entity. Ciphering and/or deciphering and header compression and/or decompression may be handled separately by the common PDCP entity, for example according to the origin or destination of an uplink or a downlink data packet. Typically, the PDCP entity implements separate security contexts for the source and the target.

User data received from the 5G core is forwarded from the source gNB 11A to the target gNB 11B while the user data is transmitted from the source gNB 11A to the UE 100A, such that the target gNB 11B may transmit the user data to the UE 100A when the UE 100A is ready to receive it in the target cell 10B.

In other words, DAPS handover (HO) is a handover procedure that maintains the source gNB 11A connection after reception of RRC message for handover and until releasing the source cell after successful random access to the target gNB 11B.

The UE 100A maintains DL reception and UL transmission for user data with source gNB 11A upon receiving DAPS HO command before successful RACH in target (UL switching).

Sometime after reception of DAPS HO command, the UE will for UL transmission, stop using the source connection and switch to using the target connection (i.e., to target gNB 11B), as in legacy HO.

Upon reception of DAPS HO command, the UE 100A will for DL reception, start using the target connection (i.e., to target gNB 11B) and continue the reception of DL from source gNB 11A and. The UE will continue DL reception until release of the source.

Upon HO failure, the UE 100A can use source link for recovery instead of reestablishment if the source link is valid.

In LTE, the term handover is typically used for a procedure used for change of PCell. The same procedure may also be used in other cases, including cases when there is no mobility / change of cells.

In contrast, in NR, the term handover is generally not used. Instead, the term reconfiguration with sync (and security refresh) is typically used for a procedure used for change of PCell. This reconfiguration procedure may again be used in other cases including cases not involving mobility. For mobility, the term PCell change is typically used. However, as an exception, the term handover is used in relation to DAPS, though also relates to change of PCell.

Reconfiguration with sync (synchronization) is described in GPP technical specification (TS) 38.331 version 15.2.1 Release 15 European telecommunications standards institute (ETSI) TS 138 331 V15.2.1 (2018-06) at Section 5.3.5.5.2. The procedure is used upon mobility i.e., when there is a change of PCell, and in such case any SCells that may be configured start in a deactivated state.

During DAPS HO, it seems less essential to use SCells for the target connection. Within source, it may however be useful to continue use of (some) SCells if supported by UE i.e., operation same as before DAPS e.g., scheduled via source PCell.

During DAPS HO, it seems possible to configure a cell in same band in source and target (intra-band CA). Given the previous, this is mainly relevant for PCell.

MR-DC is described in 3^{rd} generation partnership project (3GPP) TS 28.540 version 15.1.0 Release 15 8 ETSI TS 128 540 V15.1.0 (2019-04). MR-DC mechanisms include: coordination of UE capabilities e.g., band combination and feature sets, UE Tx power, measurements, physical downlink control channel (PDCCH) blind detection, robust header compression (ROHC), configuration alignment e.g., discontinuous reception (DRX), power headroom report (PHR), and each node configures UE according to result of inter-node interaction.

Generally, UE capability signaling and corresponding coordination are complex and hence similar DAPS specific signaling should be avoided.

It should be understood that by being arranged as described according to the second aspect, the UE, the source gNB and/or the target gNB are adapted accordingly, for example including instructions which, when run on a processor having a memory included therein, implement the method as described with respect to the first aspect

### Method

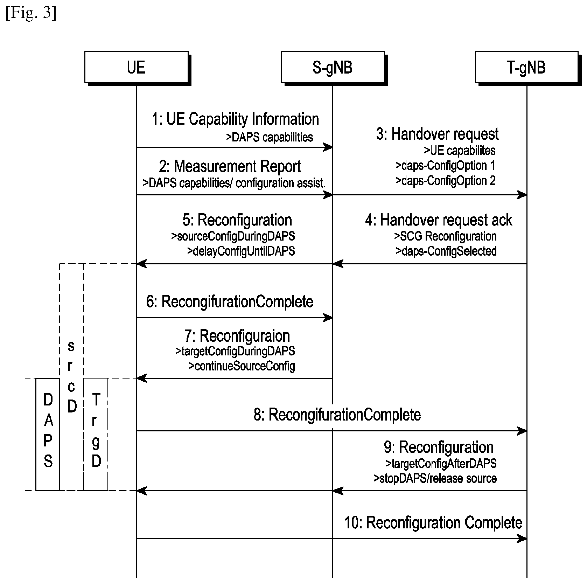

FIG. 3 schematically depicts a method according to an embodiment of the disclosure, applicable to LTE and NR.

Referring to FIG. 3, the method is of DAPS, handover of a UE, from a source gNB to a target gNB. The method includes indicating, by the UE to the source gNB, UE capability information, including DAPS capabilities, coordinating, by the source gNB and/or the target gNB, a Dual Active Protocol Stack, DAPS handover request for the UE, based, at least in part, on the DAPS capabilities of the UE, and reconfiguring, by the source gNB and/or the target gNB, the UE from the source gNB to the target gNB.

It should be understood that during DAPS, the UE simultaneously operates a source connection to the source gNB and a target connection to the target gNB, notwithstanding that the target gNB may be same as source gNB (for example, serving different source and target PCells, such as for intra-gNB mobility cases). In general, the UE has limited capabilities e.g., regarding the number of cells or the aggregated bandwidth that can be configured. During DAPS, a first part of the UE capabilities will be used for the source connection and a second part will be used for the target connection, so as to limit or even eliminate service interruption. For example, the UE capabilities will be split or divided between the source connection and the target connection. This means that during DAPS, both the source connection and the target connection have to employ a somewhat reduced configuration (i.e., relative to the full configuration employed for solely the source connection before handover or solely the target connection after handover), in order to respect the aforementioned UE capability limitations.

It should be understood that by coordinating the DAPS handover request, the source gNB and the target gNB interact so as to ensure that the source configuration and the target configuration are set in a manner respecting the UE capabilities.

During DAPS, the UE 100A temporarily applies a reduced configuration towards the source node 11A and the target gNB 11B. Some main capabilities to consider for splitting between the source and the target connection include SCell/ BC, baseband/ features set including MIMO, bandwidth, RRC signaling between network and UE 100A regarding this temporary configuration to be avoided/ limited, and/or during DAPS, UE 100A only transfers data via source node 11A. i.e., equal split may not be best .

The method according to the first aspect relates to one or more of:
UE capabilities (Features 4, 5 and 1): indicating what UE supports during DAPS operation
Network needs sufficient knowledge to respect UE capabilities or to avoid interoperability problems caused by not respecting UE capabilities;
As DAPS concerns a short period, it would be desirable to have No / limited change to UE capabilities, e.g., by use of parameters like overheating assistance.

Configuration (Feature 2): network can employ a triplet of RRC reconfigurations messages towards the UE as well as L2 / L1 signaling, as currently available

A reconfiguration message to reduce the source configuration, another one to perform DAPS HO and a final one to switch to a full target configuration.

Fallback: Source can initiate fallback to normal HO when needed e.g., when capabilities not respected.

UE behavior might be defined to cope with case in which network does not respect UE capabilities (e.g., autonomous deactivation/ release of SCells)
In general, the preference is to avoid this (regarded as incorrect network behavior).

In more detail, the method according to the first aspect covers one or more of:
UE capability signaling for DAPS period (Feature 4, 5):
UE providing capabilities relative to current/ specific configuration and possibly in responsive manner e.g., in Measurement Report (MR) message or ReconfigurationComplete message;
In the MR message, the UE may indicate the source configuration reduction that is required, if any, to enables DAPS with the target PCell for which MR was generated.

Inter-node negotiation during DAPS HO preparation to agree capability split/ reduction to reconfigure UE in accordance with its UE capabilities (Feature 1):
As an option, source could provide multiple options for target to select from or
Alternatively, source could offer a single option.

Use of triplet of reconfigurations (Feature 2):
Fallback to normal or REL-14 MBB operation e.g., if target does not (properly) support DAPS e.g., does not respect UE capabilities;
Indicating in reconfiguration prior to DAPS HO that use of included reduced source config should be delayed until DAPS HO;
Indicating in DAPS HO to continue source operation;
Indicating in DAPS HO to apply reduced source and/ or target configuration previously suggested by UE e.g., in MR message;
Indication in 1^{st} reconfiguration following DAPS HO to stop DAPS operation/ source transceive/ release source config.

Further signaling details i.e., configuration of temporary reductions and related UE capabilities.

Turning again to FIG. 3, which schematically depicts a method according to an embodiment, applicable to LTE and NR.

### Legend:

DAPS: Period of Dual Active Protocol Stack i.e., with transceive in both source and target
srcD: Reduced source config used during DAPS period
srcD: Reduced target config used during DAPS period
>:field
>>:subfield (i.e., hierarchical fields)

It should be understood that the fields and subfields may alternatively be implemented not hierarchically i.e., as fields.

At operation 1, the method includes indicating, by the UE to the source gNB (S-gNB), UE capability information, including DAPS capabilities. In more detail, the UE transmits a UECapabilityInformation message, including the DAPS capabilities field, to the source gNB.

For example, at operation 1, the UE indicates capabilities clarifying details of what it can support during DAPS operation. The aim is to limit signaling changes, but sufficient to enable network to set config in manner respecting UE capabilities and avoiding interoperability problems (when using/ in accordance with Feature 5).

At operation 2, the method includes reporting, from the UE to the source gNB, measurement report information, together with DAPS capability and configuration assistance (when using/ in accordance Feature 4). In more detail, the UE transmits a Measurement Report message, including a new subfield DAPS capability / configuration assistant, to the source gNB.

At operation 3, the method includes requesting, by the source gNB to the target gNB (T-gNB), a handover request for the UE, including UE capabilities received from the UE, optionally together with a first DAPS configuration option and/or a second DAPS configuration option (when negotiating UE capability split in accordance Feature 1). In more detail, the source gNB transmits a Handover request message, including a UE capabilities field and new fields daps-ConfigOption1 and daps-ConfigOption2, to the target gNB.

At operation 4, the method includes acknowledging, from the target gNB to the source gNB, a handover request acknowledgement, including selected DAPS configuration option and possibly secondary cell group (SCG) reconfiguration information, in response to the received handover request (again in accordance with Feature 1). In more detail, the target gNB transmits a Handover request acknowledgement message, including a SCG Reconfiguration field and a new subfield daps-ConfigSelected, to the source gNB, in response to the received Handover request message.

Hence, operations 3 and 4 include coordinating, by the source gNB and/or the target gNB, a Dual Active Protocol Stack, DAPS handover request for the UE, based, at least in part, on the DAPS capabilities of the UE.

For example, at operations 3 and 4, the source and target can negotiate how to split the UE capability for setting the source and target configurations. Some remarks regarding this negotiation:
- Nodes have more or less equal rights i.e., there is no clear master/ slave;
- Aim is to have one step negotiation i.e., no additional inter-node messages (i.e., keep existing sequence);
- There can be different negotiation options e.g., source can provide multiple DAPS configuration options from which target can select e.g., reflecting different split ratio;
   i.e., a moderate target may select a first option and a greedy target may select a second one.
- Source can initiate fallback to normal HO if required e.g., capabilities not respected, target does not (properly) support DAPS;
Different fallback options can be used: a) fallback to normal HO or b) fallback to Rel-14 MBB (for LTE, and possibly also for NR).

In one example, coordinating, by the source gNB and/or the target gNB, the handover request for the UE includes establishing a capability coordination (i.e., a split) therebetween, for example by negotiating the capability coordination therebetween and/or by defining (i.e., mandating or imposing) a configuration by the source gNB or the target gNB.

In one example, establishing the capability coordination includes an equal split (i.e., nodes have more or less equal rights i.e., no clear master/ slave).

In one example, establishing the capability coordination includes a one-step negotiation.

In one example, establishing the capability coordination between the source gNB and the target gNB includes adapting, by the source gNB, to the target gNB or adapting, by the target gNB, to the source gNB. In one example, establishing the capability coordination between the source gNB and the target gNB includes mutually adapting thereby. For example, the source may provide one or more configuration options to the target, such that the target adapts to the source according to a selected configuration option, while the source adapts in turn according to the configuration option selected by the target (i.e., the source adapts to the remainder not selected by the target).

In one example, adapting, by the target gNB, to the source gNB includes indicating, by the source gNB to the target gNB, a source configuration and setting, by the target gNB, a target configuration based, at least in part, on the UE capability information and the source configuration, by using for the target configuration leftovers of the UE capabilities given what is taken by the source gNB for the source configuration.

In one example, adapting, by the source gNB, to the target gNB includes indicating, by the target gNB, a configuration to be used thereby and using, by the source gNB, leftovers.

In one example, adapting, by the target gNB, to the source gNB includes providing, by the source gNB to the target gNB, one or more configuration options and selecting, by the target gNB, one of the provided configuration options.

In one example, establishing the capability coordination includes providing, by the source gNB to the target gNB, one or more configuration options and selecting, by the target gNB, one of the provided configuration options.

In one example, the method includes reconfiguring the UE, the source gNB and/or the target gNB.

At operation 5, the method includes transmitting, from the source gNB to the UE, a first reconfiguration message, including source configuration during DAPS, together with a field indicating UE to delay applying such reduced source configuration until DAPS. In more detail, the source gNB transmits a first Reconfiguration message, including a sourceConfigDuringDAPS field and a new field delayConfigUntilDAPS, to the UE.

At operation 6, the method includes transmitting, from the UE to the source gNB, a reconfiguration complete message, in response to the received first reconfiguration message, when the UE has completed reconfiguration according thereto. In more detail, the UE transmits a first ReconfigurationComplete message to the source gNB, in response to the received first Reconfiguration message.

Hence, operation 5 and 6 include reconfiguring the UE from the source gNB to the target gNB including transmitting, from the source gNB to the UE, the first reconfiguration message, for reducing UE capabilities required with respect to the source gNB (i.e., with respect to the source collection). It should be understood that the UE capabilities required in respect the source connection are reduced such that sufficient UE capabilities are available for simultaneously operating the target connection.

In one example, the first reconfiguration message includes a field/bit indicating a delay for the UE to apply the received configuration.

For example, at operations 5 and 6, the first reconfiguration message (Reconfig1) is used by source to reduce source configuration as required for DAPS. This may be performed during HO preparation unless reduced source configuration depends on what target selects (e.g., when as part of negotiation during handover preparation the source provides multiple UE capability split options, leaving freedom for target regarding what to select).

At operation 7, the method includes transmitting, from the source gNB to the UE, a second reconfiguration message, including a target configuration to be used during DAPS, together with a field specifying the UE to continue source configuration. In more detail, the source gNB transmits a second Reconfiguration message, including a targetConfigDuringDAPS field and a new field continueSourceConfig, to the source UE.

At operation 8, the method includes transmitting, from the UE to the target gNB, a reconfiguration complete message, in response to the received second reconfiguration message, when the UE has completed reconfiguration according thereto. In more detail, the UE transmits a second ReconfigurationComplete message to the target gNB, in response to the received second Reconfiguration message.

Hence, operation 7 and 8 include reconfiguring the UE from the source gNB to the target gNB including transmitting, from the source gNB to the UE, a second reconfiguration message, for reconfiguring the UE to initiate DAPS handover.

In one example, the second reconfiguration message includes an indication whether to apply DAPS operation, for example a field/bit specifying that the UE shall continue using a source configuration and/or to apply DAPS operation.

In one example, the second reconfiguration message includes a field/bit specifying that the UE shall apply a reduced source configuration and/or target configuration that the UE previously indicated as an option for supporting DAPS. For example, this field/boot may be included when using an additional and/or alternative mechanism for indicating DAPS, as described with respect to Feature 4.

For example, at operations 7 and 8, the second reconfiguration message (Reconfig2) is used to initiate ReconfigWithSync using DAPS.

At operation 9, the method includes transmitting, from the target gNB to the UE, a third reconfiguration message, including target configuration after DAPS together with a field/bit indicating UE to release the source configuration and stop DAPS. In more detail, the target gNB transmits a third Reconfiguration message, including a targetConfigAfterDAPS field and a new field stopDAPS/release source, to the UE.

At operation 10, the method includes transmitting, from the UE to the target gNB, a reconfiguration complete message, in response to the received third reconfiguration message, when the UE has completed reconfiguration according thereto. In more detail, the UE transmits a third ReconfigurationComplete message to the target gNB, in response to the received third Reconfiguration message.

Hence, operations 9 and 10 include reconfiguring the UE including transmitting, from the target gNB to the UE, a third reconfiguration message, for reconfiguring the UE to release a source configuration and to reconfigure the UE to apply a target configuration based, at least in part, on the UE capability information, for example the full UE capabilities such as including those previously required for operating the source connection.

For example, at operations 9 and 10, the third reconfiguration message (Reconfig3) is used to apply full configuration after DAPS and possibly to stop DAPS/ release source config/ connection:
- Additional triggers may be defined for switching to the full target config/ to stop DAPS/ to release source e.g., when no RRC message but L2 commands are used to switch to full target config;
- the switch/ release may be performed upon receiving grant.

It should be understood that outside DAPS, a regular/non-reduced configuration is used in either source or target gNB.

Described herein include five features (Feature 1 to Feature 5) related to DAPS HO, that may be applied individually or in combination.

### Feature 1

Feature 1 relates to coordination/ negotiation between the source node and the target node regarding UE capabilities to ensure that source and target set configurations that together do not except the UE capability limitations. I.e., the two nodes will have to share the UE capabilities and agree how a split.

In one example, coordinating, by the source gNB and/or the target gNB, the handover request for the UE includes establishing a capability coordination therebetween.

In one example, establishing the capability coordination between the source gNB and the target gNB includes adapting, by the source gNB, to the target gNB or adapting, by the target gNB, to the source gNB. For example, coordinating between the source node and the target node regarding capability coordination may be according to alternatives including:

### Option A: source node adapts to target node (target is king)

In one example, adapting, by the source gNB, to the target gNB includes indicating, by the target gNB, a configuration to be used thereby and using, by the source gNB, leftovers (i.e., resources not used by the target node).

HV> Below is appropriate for approach C, where source provides some options for target to select from. For Option A I would suggest the following
Option A may result in additional delay as an additional interaction step may be required. This is because the source configuration that is selected at the end of the first step, is to be used as the baseline for the target configuration. Moreover, during DAPS most data may be carried by the source so it seems preferable for source to have more say in the decision-making.

### Option B: source node is king or target node adapts to source node

In one example, adapting, by the target gNB, to the source gNB includes indicating, by the source gNB to the target gNB, a source configuration and setting, by the target gNB, a target configuration based, at least in part, on the UE capability information and the source configuration, by using for the target configuration leftovers of the UE capabilities given what is taken by the source gNB for the source configuration.

In contrast to Option A, Option B is relatively simpler and involves relatively fewer changes to standards, for example, while it provides more decision-making power to the node via which most data may be transferred during DAPS.

In one example, adapting, by the target gNB, to the source gNB includes indicating, by the source node, a configuration, for example a reduced source configuration, to be used thereby and using, by the target node, leftovers (i.e., resources not used by the source node). Generally, a UE may support a limited number of serving cells or a limited total aggregated bandwidth (BW). For example, if a UE support a total aggregated BW of 300 and if the source gNB selects an aggregated BW of 200, the leftovers remaining for the target gNB is an aggregated BW of 100.

### Option C: hybrid

This option includes some mix (with Option A becoming target is king). It would cover the case in which source provides multiple options (as otherwise its same as Option B).

In one example, the method includes restricting, by the source node, a freedom of the target node, for example by providing one or more (i.e., a single or multiple) configuration restriction options and optionally, selecting, by the target node, a configuration restriction option therefrom i.e., each option reflecting a different UE capability split or coordination between source and target configurations. In one example, the configuration restriction options are ordered preferentially (i.e., provided in order of preference).

In one example, adapting, by the target gNB, to the source gNB includes providing, by the source gNB to the target gNB, one or more configuration options and selecting, by the target gNB, one of the provided configuration options.

While Option C provides relatively more balanced decision-making between the source gNB and the target gNB, Option C is relatively more complicated and involves relatively more changes to standards, for example.

More particularly, Feature 1 may relate to inter-node negotiation regarding UE capability coordination/ split. For example, Feature 1 may relate to UE capability sharing. With Option B, source node is king i.e., there is no negotiation but source node indicates the (reduced) config that it will use during DAPS operation and target can use the leftovers (see Option B above). I.e., source dictates and target can only set target configuration according to what is leftover of UE capabilities (single option provided by source)

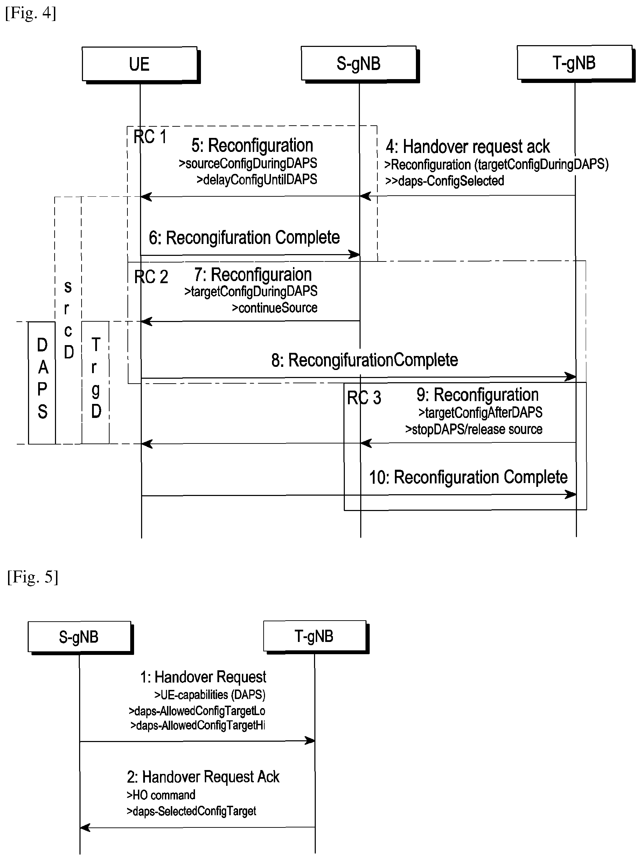

FIG. 4 schematically depicts a method of FIG. 3, in more detail according to an embodiment of the disclosure. FIG. 5 schematically depicts a method of FIG. 3, in more detail according to an embodiment of the disclosure. More particularly, FIG. 5 relates to inter-node interaction
Referring to FIGS. 3 and 5, at operation 1 (operation 3 of FIG. 3), the method includes requesting, by the source gNB to the target gNB, the handover request.

At operation 2 (operation 4 of FIG. 3), the method includes acknowledging, from the target gNB to the source gNB, a handover request acknowledgement.

In more detail, as described previously, options for inter-node negotiation generally include signaling options based on existing HO preparation sequence and/or each node deciding details of the configuration it controls, but nodes negotiate about the UE capability split used during DAPS.

As described previously, Option A relates to the source node adapting to the target node, in which the target node is king i.e., the source node selects from leftovers of target node, such that the target node can select whatever it likes and source node will have to adjust (the source node could indicate what it prefers to use).

As described previously, Option B relates the source node limiting freedom of the target node, as schematically depicted in FIG. 5. For example, the source node decides such that the source node is king i.e., the target node selects from leftovers of the source node. In this example, the source node indicates the temporary configuration it will use and the target node can select from the leftovers.

In more detail, options for inter-node negotiation include:

### General

Signaling options based on existing HO preparation sequence;
Each node decides details of the configuration it controls, but nodes negotiate about split.

### Options:

Source adapts to target:
Target is king i.e., source selects from leftovers of target
Target can select whatever it likes and source will have to adjust (source could indicate what it prefers to use)
Source limits target freedom (as shown in FIG. 3)
Source provides the options that target can select from, possibly including indication of a source preferred one
Source decides:
   Source is king i.e., target selects from leftovers of source
   Source indicates the temporary config it will use and target can select from the leftovers.

Source may initiate fallback e.g., if target does not support DAPS or generates target configuration that together with source config does not respect UE capabilities
Source may know capability of target (e.g., OAM) or may infer non-support from contents of Handover Request Ack;
Either fallback to regular HO or fallback to Rel-14 MBB.

### Feature 2

Feature 2 relates to normal procedure (i.e., successful completion of DAPS HO i.e., no failure) in particular, use of a triplet of reconfiguration messages upon DAPS HO.

In this example, reconfiguring the UE from the source gNB to the target gNB involves three reconfiguration messages/procedures. It should be understood that the triplet or three reconfiguration messages/procedures are handled by the UE in series (or tandem) i.e., serial reconfiguration. In this way, the serial messages/procedures may be transmitted/implemented conditionally or responsively, for example based on success of the previous message/procedure, while each message/procedure may handle a specific part of reconfiguration, thereby improving robustness. For example, this three message approach is efficient, thereby improving handover by reducing latency. Furthermore, this three message approach is relatively simple, involving very limited changes to standards. In contrast, relatively more complex reconfiguration procedures, such as combining the first and second or second and third reconfiguration messages, require substantial changes to standards while reductions in latency may be more limited.

During DAPS HO, the UE has a connection with the node controlling the source PCell, that is referred to as the source connection (of the UE). The UE also has a connection with the node controlling the target PCell, that is referred to as the target connection.

Briefly, the first reconfiguration message is used to modify the source configuration of the UE to a reduced configuration to enable DAPS operation with the target node (given UE capabilities). The second reconfiguration message is used to provide target configuration and instruct the UE to perform DAPS HO. This reconfiguration message may include a field indicating that UE should continue source operation i.e., to perform DAPS rather than a regular HO. The third reconfiguration message includes a field indicating to stop DAPS operation/ source transceive / release source configuration and possibly to modify target configuration to take full use of UE capabilities (i.e., no need to split UE capabilities between source and target connection anymore).

In one example, the method includes normal procedure, including using a triplet of reconfiguration messages (i.e., triple reconfiguration messaging and hence three reconfiguration messages).

In one example, reconfiguring the UE from the source gNB to the target gNB includes transmitting, from the source gNB to the UE, a first reconfiguration message, for reducing UE capabilities required with respect to the source gNB, for example for reducing UE capabilities required for operating the source collection such that sufficient UE capabilities are available for simultaneously operating the target connection.

In one example, the first reconfiguration message includes a field/bit indicating a delay for the UE to apply the received configuration.

In one example, the first reconfiguration message includes instructions to modify a source configuration of the source node to a reduced configuration for enabling DAPS operation with the target node, for example for given UE capabilities. In one example, the first message includes a field indicating that application of the reconfiguration is to be delayed until starting DAPS HO.

In one example, the second reconfiguration message includes instructions to provide a target configuration and/or to perform DAPS HO. In one example, the second message includes a field indicating that the UE should continue the use of the source configuration to apply DAPS operation.

In one example, the third reconfiguration message includes a field indicating to stop DAPS operation, source transception (i.e., transmission and/or reception) and/or release source configuration.

FIG. 4 schematically depicts a method of FIG. 3, in more detail. More particularly, FIG. 4 schematically depicts use of a triplet of reconfiguration messages (i.e., reconfiguration triplet) upon DAPS HO, according to an embodiment.

### General:

Option 1: Serial operation: DAPS HO is initiated after successful completion of the source reconfiguration
Option 2: Parallel: Reduction of source config and DAPS HO are initiated together (alike SMC and initial Reconfiguration) i.e., network signals DAPS HO together with source reconfiguration rather than only after completion of source reconfiguration

It is noted that a Reconfiguration used to change PCell/ perform handover, signals the target configuration by indicating the changes compared to the source configuration (i.e., the delta). The source configuration used as baseline for the Reconfiguration used to command DAPS handover differs for the two previous options. With Option 1, the reduced source configuration is the baseline (i.e., configuration resulting after source reconfiguration) for delta while with Option 2, the original source configuration is the baseline.

There are two reconfiguration procedures:
A: to change source configuration to take a lower share of the UE capabilities, so there is a sensible leftover for the target configuration; and B: to initiate DAPS handover.

In case of Option 1, the network knows that UE has completed procedure A when it initiates procedure B. This is relevant as during preparation of handover, the source node provides the current configuration to the target node. The target node indicates the target configuration by signaling changes compared to the current source configuration of the UE (as target node received during handover preparation from the source node).

In case of Option 2: it is not so clear what configuration source node provides to target node during DAPS HO preparation. Herein, it is assumed that this may be the configuration prior to procedure A i.e., not yet the reduced source configuration.

At operation 5, the method includes transmitting, from the source gNB to the UE, a first reconfiguration message Rc1, for reducing the source configuration of the UE. In this example, the first reconfiguration message Rc1 includes a field/bit indicating that the UE shall delay applying the received configuration i.e., until it applies DAPS operation.

At operation 7, in this example, the method includes transmitting, from the source gNB to the UE, a second reconfiguration message Rc2, for reconfiguring the UE with synchronisation with DAPS. In this example, the second reconfiguration message Rc2 includes a field/bit indicating that the UE shall continue source configuration and/or to apply DAPS operation (continue using source in parallel to target connection). In this example, the second reconfiguration message Rc2 includes a field/bit indicating that the UE should switch to reduced source configuration and/or target configuration that the UE previously indicated as an option for supporting DAPS for example in the MR message, such that the first reconfiguration message Rc1 may not be or is not required.

At operation 9, in this example, the method includes transmitting, from the target gNB to the UE, a third reconfiguration message Rc3, for reconfiguring the UE to switch to full target configuration and for stopping DAPS. In this example, the third reconfiguration message Rc3 includes a field/bit specifying that the UE will release the source configuration i.e., to stop DAPS operation.

### Feature 3

Feature 3 relates to failure procedure (c.f. normal procedure).

In one example, the method including initiating, by the source gNB, fallback to normal HO, for example if target connection selected by target gNB together with source configuration does not respect UE capabilities, or the target gNB does not (properly) support DAPS. In one example, fallback includes fallback to normal HO or fallback to Rel-14 MBB (for LTE, and possibly also for NR).

In this way, handling of the HO is improved in the event of failure, thereby reducing delays and hence reducing the likelihood of losing radio connection. More particularly, by falling back to normal HO, for example, normal HO may be completed relatively more quickly compared with rather than rejecting the DAPS HO and subsequently, initiating and performing normal HO.

### Features 4 & 5 overview

### Starting points/ general:

Network needs to know in detail what the UE is capable of. I.e., whether the UE can add to current source config support Rx a) in same band as source PCell (intra-freq HO) or b) in band of target PCell (inter-freq).

The capability concerns RF (additional support of band) as well as baseband features (e.g., UE may support for limited MIMO layers)
Aim is that UE indicates capabilities for period of DAPS operation with some limited signaling changes
Extending UE capabilities with something similar to CA/ DC capabilities (but now specifically for DAPS) seems overkill.

Options to be covered:
Relative/ responsive (Feature 4): UE providing capabilities in relative to current/ specific configuration
In MR message or in responsive manner i.e., in ReconfigurationComplete. The UE capability for DAPS operation may include:
   A reduced target configuration for which UE can support DAPS (PCell only)
   For simplicity indication may include few parameters e.g., indication of supported bandwidth (part/s) and feature set combinations/ or even just #MIMO layers
   Source reduction i.e., what source configuration reductions would be needed to enable DAPS support with the suggested reduced target configuration (as in previous bullet)
   Assistance regarding pattern(s) for TDM operation for Rx and/or Tx network is requested to configure
   UE capability extension for CA/ DC capable UEs (Feature 5): indication whether UE supports DAPS according to CA/ DC capabilities (i.e., network can use any supported BC for DAPS and with same feature set combinations).

Per UE capability indicating i.e., indicating support of DAPS for BCs for which no DAPS specific signaling is provided per BC (i.e., default value indicating whether same as CA/ DC capabilities)
Per BC capability indication that for concerned BC DAPS support is different from per UE setting
Per BC capability indication of the feature set combination (FSC) supported with DAPS
Note: should avoid the extensive capability signaling, i.e., per BC indication of DAP specific features (FSC) is costly and complex
UE capability extension for UEs not CA/ DC capable
Similar to above e.g., pattern for TDM operation

### Feature 4

Feature 4 relates to signaling of UE capabilities in a relative or responsive manner in order to limit the UE capability signalling. This method includes, signaling the DAPS capabilities relative to a current or a specific configuration, for example using or within a ReconfigurationComplete message or within Measurement Report (MR) message. The method may also include, for simplicity, indicating DAPS capabilities/ configurations supported for DAPS operation by means of a few most essential parameters e.g., indication of supported bandwidth (part/s) and feature set combinations/ or even just #MIMO layers.

In this way, the amount of signaling required for indicating the DAPS capabilities is reduced.

The method includes indicating, by the UE to the source gNB, UE capability information, including DAPS capabilities.

In one example, the DAPS capabilities define supported configurations relative to a current or a specific configuration.

In one example, the DAPS capabilities are included in a ReconfigurationComplete message or in a MR message.

In one example, the MR message indicates UE DAPS capabilities relative to the current source configuration (i.e., with the source gNB) and/or to the (potential) target configuration (i.e., with the target gNB), for which MR was triggered. For example, the UE may indicate a reduction of the source configuration that is required to enable DAPS with the potential target PCell and optionally, one or more configuration options and/or restrictions for such target PCell configuration.

In one example, the DAPS capabilities define supported configurations relative to a current or a specific configuration.

In one example, the DAPS capabilities are included in a ReconfigurationComplete message or in a MR message.

In one example, the UE indicates the DAPS capabilities in the ReconfigurationComplete message i.e., indicating the DAPS capabilities relative to the updated source configuration resulting from the preceding Reconfiguration message.

In one example, the MR message indicates DAPS capabilities relative to the current source configuration and/or for the target, for which the MR was triggered.

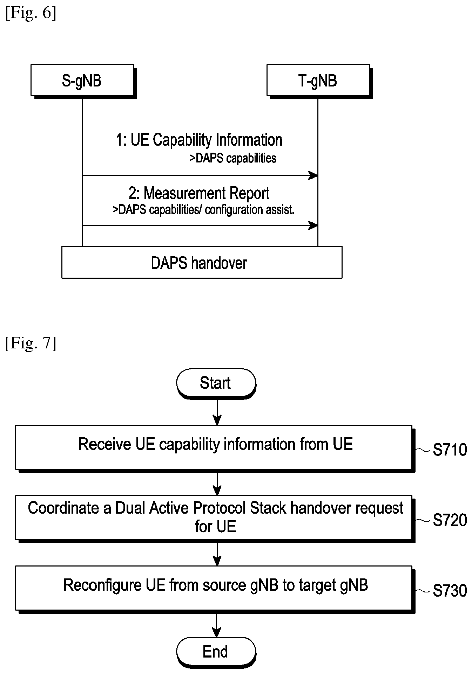

FIG. 6 schematically depicts the method of FIG. 3, in more detail. More particularly, FIG. 6 relates to capability indication.

Referring to Fig. 6, at operation 1, the method may include transmitting transmitting, by the source gNB to the target gNB, a UE capability information. The UE capability information may include DAPS capabilities.

At operation 2, the method may include transmitting, by the source gNB to the target gNB, a measurement report. The measurement report may include DAPS capabilities and configuration assist.

### Feature 5

Feature 5 relates to signaling of DAPS capabilities using the UE capability framework, particularly for UEs having carrier aggregation (CA) and/or dual connectivity (DC) capabilities in respect to supported Band Combinations (BC) capabilities.

In this way, existing UE capability framework is reused in an efficient manner.

It is noted that DAPS capabilities, regardless whether signalled as in the method of Feature 4 or in the method of Feature 5 are applied to inter-node coordination/ negotiation regarding the UE capability split as discussed in the previous, in which for example the source dictates and target takes leftover (single option provided by source) (i.e., Feature 1 Option B).

The method includes indicating, by the UE to the source gNB, within the UE capability information, the DAPS capabilities.

In one example, indicating, by the UE to the source gNB, the UE capability information includes indicating, by the UE, a per UE capability indication regarding support of DAPS. For example, the per UE DAPS capability, indicates whether DAPS is supported for BCs for which the per BC capability signaling does not include DAPS specific capabilities (i.e., the per UE capability concerns a default value e.g., indicating whether DAPS is supported with capabilities same as CA/ DC capabilities).

In one example, indicating, by the UE to the source gNB, the UE capability information includes indicating, by the UE, DAPS capabilities within the per BC capabilities, for example that for concerned BC DAPS, support is different from the default indicated by the per UE DAPS capability setting.

In one example, indicating, by the UE to the source gNB, the UE capability information includes indicating, by the UE, within the per BC capabilities, a feature set combination (FSC) supported with DAPS.

In one example, indicating, by the UE to the source gNB, the UE capability information includes indicating, by the UE, a pattern for TDM operation, for example wherein the UE includes and/or is a non-CA/DC capable UE.

In more detail, Feature 5 may include and/or relate to:
UE capability extension for CA/ DC capable UEs: indication whether UE supports DAPS according to CA/ DC capabilities (i.e., network can use any supported BC for DAPS and with same feature set combinations).

Per UE capability indicating i.e., indicating support of DAPS for BCs for which no DAPS specific signaling is provided per BC (i.e., default value indicating whether same as CA/ DC capabilities)
Per BC capability indication that for concerned BC DAPS support is different from per UE setting
Per BC capability indication of the feature set combination (FSC) supported with DAPS
Note: should avoid the extensive capability signalling, i.e., per BC indication of DAP specific features (FSC) is costly and complex.

**[Table 1]**

| Examples | | | | | |
|---|---|---|---|---|---|
| S-Config | T-Config | PCell change | | Case | Remarks |
| PCell only | PCell only | Intra-Freq | | a. UE does not support (intra-band) CA for source and target | How to handle (the primary) case a)? |
| | | | | b. UE supports CA but with reduced features | |
| | | | | | Capability split relevant only for case b)? |
| | | | | c. UE fully supports concerned CA | |
| PCell only | PCell only | Inter-Freq | Same as for intra-freq | | Same as for intra-freq |
| 2DL CA | 2DL CA | Intra-Freq | | d. UE does not support (intra-band) CA for source and target PCell | Same as for first case |
| | | | | e. UE supports concerned CA but with reduced features | |
| | | | | f. UE fully supports (intra-band) CA for source and target PCell, and possibly even with source SCell | |
| 2DL CA | 2DL CA | Inter-Freq | Same as for intra-freq | | Same as for first case |

Which cases should we focus on:
Not a single LTE UE implementation supports DC i.e., we should focus on really simple solutions
For NR, UEs may support DC for some BCs but not for the one required for DAPS on source/ target PCell
Operation in target can be limited e.g., no SCells, limited bandwidth and MIMO layers
Points discussed in previous
Operation in target limited e.g., no SCells, limited bandwidth and MIMO layers
UE not supporting CA/ DC, UE operation with capability split
Target configures cell in (different BWP in) same or different band (intraF/ interF DAPS HO)
Some support of dual RX
TDM operation for Tx/ UL? FFS what switching times will apply?
UE supports CA/ DC, UE operation with capability split
UE supports a BC including [B1, B2, B3], with further options
Intra-band CA supported for B1 and B2
PCell change options
IntraF: Source configures PCell on B1 and B2 and target configures PCell on B2 (intra-band)
InterF#1: Source configures PCell on B1 and B2 and target configures PCell on B2 (intra-band)
InterF#2: Source configures PCell on B1 and B2 and target configures PCell on B3 (no intra-band)
Capability splitting approaches
When re-using CA/ DC capabilities and same inter-action
Source indicates from which allowed BCs (including feature sets) that target is allowed to select from
Above approach can also be used when UE capabilities include separate capabilities for DAPS e.g.
For some BCs a bit indicating that DAPS is supported (with same feature set combinations)
For some BCs for which DAPS is supported separate feature set combinations

**[Table 2]**

| S-Config | T-Config | PCell change | Case | Remarks |
|---|---|---|---|---|
| PCell only | PCell only | Intra-Freq | a. UE does not support (intra-band) CA for source and target | How to handle (the primary) case a)? |
| | | | b. UE supports CA but with reduced features | |
| | | | | Capability split relevant only for case b)? |
| | | | c. UE fully supports concerned CA | |
| 2 DL CA | PCell only | Intra-Freq | a. UE does not support (intra-band) CA for source and target PCell | Same as for first case |
| | | | b. UE supports concerned CA but with reduced features | |
| | | | c. UE fully supports (intra-band) CA for source and target PCell, and possibly even with source SCell | |

FIG. 7 schematically depicts a flow chart illustrating a method of DAPS, handover of a UE from a source gNB to a target gNB according to an example embodiment as disclosed herein.

Referring to FIGS. 6 and 7, the source gNB may receive, from the UE, UE capability information (operation S710). The UE may indicate DAPS capabilities of the UE to the source gNB by using the UE capability information. The source gNB may coordinate a DAPS handover request of UE from the source gNB to a target gNB, based at least in part, on the DAPS capabilities of the UE (operation S720). In some embodiment, the target gNB may coordinate the DAPS handover request of the UE, based at least in part, on the DAPS capabilities of the UE. The source gNB may reconfigure the UE from the source gNB to the target gNB (operation S730). In some embodiment, the target gNB may reconfigure the UE from the source gNB to the target gNB.

### Glossary

CA: Carrier Aggregation
BC:Broadcast
MC: Multicast
DC:Dual Connectivity
MR:Multi-Radio
PCell:Primary Cell
SCell: Secondary Cell
MR-DC:Multi RAT - Dual Connectivity
5GC:5G Core network
5GS:5G System
AMF:Access and Mobility Management Function
EN-DC:E-UTRA-NR Dual Connectivity
EPS:Evolved Packet System
MBB:Mobile Broadband
MR-DC:Multi-RAT Dual Connectivity
NG-RAN:NG Radio Access Network
NR:New Radio
OAM:Operations Administration and Maintenance
PCF:Policy Control Function
RRC:Radio Resource Control
SI: System Information
SIB: System Information Block
UDM: Unified Data Management
UDR:Unified Data Repository
UDSF:Unstructured Data Storage Function

Although a preferred embodiment has been shown and described, it will be appreciated by those skilled in the art that various changes and modifications might be made without departing from the scope of the disclosure, as defined in the appended claims and as described above.

Attention is directed to all papers and documents which are filed concurrently with or previous to this specification in connection with this application and which are open to public inspection with this specification.

All of the features disclosed in this specification (including any accompanying claims and drawings), and/or all of the steps of any method or process so disclosed, may be combined in any combination, except combinations where at most some of such features and/or steps are mutually exclusive.

The disclosure is not restricted to the details of the foregoing embodiments. The disclosure extends to any novel one, or any novel combination, of the features disclosed in this specification including any accompanying claims and drawings, or to any novel one, or any novel combination, of the steps of any method or process so disclosed.

While the disclosure has been shown and described with reference to various embodiments thereof, it will be understood by those skilled in the art that various changes in form and details may be made therein without departing from the scope of the disclosure as defined by the appended claims.

## Claims

1. A method of dual active protocol stack, DAPS, handover of a user equipment, UE, performed by a source base station, BS in a wireless communication, the method comprising:
receiving, from the UE, UE capability information including DAPS capabilities;
transmitting , to a target BS, a DAPS handover request for the UE including the UE capability information;
receiving, from the target BS, a handover request acknowledgement message, including a selected DAPS configuration option;
transmitting, to the UE, reconfiguration information, including a source configuration during DAPS, together with a field indicating UE to delay applying such reduced source configuration until DAPS;
transmitting, to the UE, reconfiguration information, including a target configuration to be used during DAPS, together with a field specifying the UE to continue the source configuration;
receiving, from the target BS, a first reconfiguration message including a field indicating to the UE to stop a DAPS operation and to release the source configuration; and
transmitting, to the UE, the first reconfiguration message.

2. The method of claim 1, further comprising:
indicating, to the target gNB, the source configuration.

3. The method of claim 1, further comprising:
transmitting, to the UE, a second reconfiguration message, for reducing UE capabilities required with respect to the source gNB, and
wherein the second reconfiguration message comprises at least one of field or bit indicating a delay for the UE to apply the received configuration.

4. The method of claim 1, further comprising:
transmitting, to the UE, a third reconfiguration message, for reconfiguring the UE to initiate DAPS handover, and
wherein the third reconfiguration message comprises an indication whether to apply DAPS operation.

5. The method of claim 4, wherein the third reconfiguration message comprises at least one of field or bit specifying that the UE shall apply a reduced source configuration or target configuration that the UE previously indicated as an option for supporting DAPS.

6. The method of claim 1, wherein the UE capability information includes carrier aggregation capability of the UE,
wherein the UE capability information includes dual connectivity capability of the UE,
wherein the DAPS capabilities define supported configurations relative to a current or a specific configuration,
wherein the DAPS capabilities comprise a per UE capability,
wherein the DAPS capabilities comprise a per band combination, BC, capability,
wherein the per BC capability comprises a feature set combination, FSC, indicating the DAPS capabilities,
wherein the UE capability information comprises a pattern for time division multiplexing, TDM, operation, and
wherein the UE comprises a non-carrier aggregation/dual connectivity, CA/DC, capable UE.

7. A method of dual active protocol stack, DAPS, handover performed by a user equipment, UE in a wireless communication, the method comprising:
transmitting, to a source base station, BS, UE capability information including DAPS capabilities,
receiving, from the source BS, reconfiguration information, including a source configuration during DAPS, together with a field indicating to delay applying such reduced source configuration until DAPS;
receiving, from the source BS, reconfiguration information, including a target configuration to be used during DAPS, together with a field specifying to continue the source configuration;
receiving, from the source BS, a first reconfiguration message including a field indicating to the UE to stop a DAPS operation and to release a source configuration.

8. The method of claim 7, further comprising:
receiving, from the source BS, a second reconfiguration message, for reducing UE capabilities required with respect to the source gNB,
wherein the second reconfiguration message comprises at least one of field or bit indicating a delay for the UE to apply the received configuration.

9. The method of claim 7, further comprising:
receiving, from the source BS, a third reconfiguration message, for reconfiguring the UE to initiate DAPS handover,
wherein the third reconfiguration message comprises an indication whether to apply DAPS operation.

10. The method of claim 9, wherein the third reconfiguration message comprises at least one of field or bit specifying that the UE shall apply a reduced source configuration or target configuration that the UE previously indicated as an option for supporting DAPS.

11. The method of claim 7, wherein the UE capability information includes carrier aggregation capability of the UE,
wherein the UE capability information includes dual connectivity capability of the UE,
wherein the DAPS capabilities define supported configurations relative to a current or a specific configuration,
wherein the DAPS capabilities comprise a per UE capability,
wherein the DAPS capabilities comprise a per band combination, BC, capability,
wherein the per BC capability comprises a feature set combination, FSC, indicating the DAPS capabilities,
wherein the UE capability information comprises a pattern for time division multiplexing (TDM) operation, and
wherein the UE comprises a non-carrier aggregation/dual connectivity, CA/DC, capable UE.

12. A source base station, BS, of dual active protocol stack, DAPS, handover for a user equipment, UE, the source BS comprising:
a transceiver; and
at least one processor couple to the transceiver, wherein the at least one processor is configured to:
receive, from the UE, UE capability information including DAPS capabilities, transmit, to a target BS, a DAPS handover request for the UE including the UE capability information,
receive, from the target BS, a handover request acknowledgement message, including a selected DAPS configuration option;
transmitting, to the UE, reconfiguration information, including a source configuration during DAPS, together with a field indicating UE to delay applying such reduced source configuration until DAPS;
transmitting, to the UE, reconfiguration information, including a target configuration to be used during DAPS, together with a field specifying the UE to continue the source configuration;
receiving, from the target BS, a first reconfiguration message including a field indicating to the UE to stop a DAPS operation and to release the source configuration, and
transmitting, to the UE, the first reconfiguration message.

13. The source BS of claim 12, wherein the at least one processor is further configured to operate according to one of methods in claim 2 to 6.

14. A user equipment, UE, of dual active protocol stack, DAPS, handover in a wireless communication, the UE comprising:
a transceiver; and
at least one processor couple to the transceiver, wherein the at least one processor is configured to:
transmit, to a source base station, BS, UE capability information including DAPS capabilities,
receive, from the source BS, reconfiguration information, including a source configuration during DAPS, together with a field indicating UE to delay applying such reduced source configuration until DAPS;
receive, from the source BS, reconfiguration information, including a target configuration to be used during DAPS, together with a field specifying the UE to continue the source configuration;
receiving, from the source BS, a first reconfiguration message including a field indicating to the UE to stop a DAPS operation and to release a source configuration.

15. The UE of claim 14, wherein the at least one processor is further configured to operate according to one of methods in claim 8 to 11.

## Patentansprüche

1. Verfahren für einen Handover eines Benutzergeräts, UE, mittels Dual Active Protocol Stack, DAPS, das von einer Quellbasisstation, BS, bei einer drahtlosen Kommunikation durchgeführt wird, wobei das Verfahren Folgendes umfasst:
Empfangen, von dem UE, von UE-Fähigkeitsinformationen, die die DAPS-Fähigkeiten beinhalten;
Übertragen, an eine Ziel-BS, einer DAPS-Handover-Anforderung für das UE, die die UE-Fähigkeitsinformationen beinhaltet;
Empfangen, von der Ziel-BS, einer Handover-Anforderungsbestätigungsnachricht, die eine ausgewählte DAPS-Konfigurationsoption beinhaltet;
Übertragen, an das UE, von Neukonfigurationsinformationen, die eine Quellkonfiguration während des DAPS beinhalten, zusammen mit einem Feld, das dem UE angibt, ein Anwenden einer derartigen reduzierten Quellkonfiguration bis zum DAPS zu verzögern;
Übertragen, an das UE, von Neukonfigurationsinformationen, die eine Zielkonfiguration beinhalten, die während des DAPS zu verwenden ist, zusammen mit einem Feld, das dem UE vorschreibt, die Quellkonfiguration beizubehalten;
Empfangen, von der Ziel-BS, einer ersten Neukonfigurationsnachricht, die ein Feld beinhaltet, das dem UE angibt, einen DAPS-Betrieb zu beenden und die Quellkonfiguration freizugeben; und
Übertragen, an das UE, der ersten Neukonfigurationsnachricht.

2. Verfahren nach Anspruch 1, ferner umfassend:
Angeben, für den Ziel-gNB, der Quellkonfiguration.

3. Verfahren nach Anspruch 1, ferner umfassend:
Übertragen, an das UE, einer zweiten Neukonfigurationsnachricht, zum Reduzieren der in Bezug auf den Quell-gNB erforderlichen UE-Fähigkeiten, und
wobei die zweite Neukonfigurationsnachricht mindestens ein Feld oder Bit umfasst, das eine Verzögerung angibt, mit der das UE die empfangene Konfiguration anzuwenden hat.

4. Verfahren nach Anspruch 1, ferner umfassend:
Übertragen, an das UE, einer dritten Neukonfigurationsnachricht zum Neukonfigurieren des UE, um einen DAPS-Handover einzuleiten; und
wobei die dritte Neukonfigurationsnachricht eine Angabe darüber umfasst, ob ein DAPS-Betrieb anzuwenden ist.

5. Verfahren nach Anspruch 4, wobei die dritte Neukonfigurationsnachricht mindestens eines von einem Feld oder Bit umfasst, das vorschreibt, dass das UE eine reduzierte Quellkonfiguration oder Zielkonfiguration anwenden muss, die das UE zuvor als Option zum Unterstützen von DAPS angegeben hat.

6. Verfahren nach Anspruch 1, wobei die UE-Fähigkeitsinformationen eine Trägeraggregationsfähigkeit des UE beinhalten,
wobei die UE-Fähigkeitsinformationen eine Dualkonnektivitätsfähigkeit des UE beinhalten,
wobei die DAPS-Fähigkeiten unterstützte Konfigurationen relativ zu einer aktuellen oder einer spezifischen Konfiguration definieren,
wobei die DAPS-Fähigkeiten eine für ein UE spezifische Fähigkeit umfassen,
wobei die DAPS-Fähigkeiten eine für eine Frequenzbandkombination, BC, spezifische Fähigkeit umfassen,
wobei die BC-spezifische Fähigkeit eine Merkmalssatzkombination, FSC, umfasst, die die DAPS-Fähigkeiten angibt,
wobei die UE-Fähigkeitsinformationen ein Muster für den Betrieb mittels Zeitmultiplex, TDM, umfassen und
wobei das UE ein zu Nichtträgeraggregation/Dualkonnektivität, CA/DC, fähiges UE umfasst.

7. Verfahren für einen Handover mittels Dual Active Protocol Stack, DAPS, der durch ein Benutzergerät, UE, bei einer drahtlosen Kommunikation durchgeführt wird, wobei das Verfahren Folgendes umfasst:
Übertragen, an eine Quellbasisstation, BS, von UE-Fähigkeitsinformationen, die die DAPS-Fähigkeiten beinhalten,
Empfangen, von der Quell-BS, von Neukonfigurationsinformationen, die eine Quellkonfiguration während DAPS beinhalten, zusammen mit einem Feld, das angibt, ein Anwenden einer derartigen reduzierten Quellkonfiguration bis zum DAPS zu verzögern;
Empfangen, von der Quell-BS, von Neukonfigurationsinformationen, die eine Zielkonfiguration beinhalten, die während des DAPS zu verwenden ist, zusammen mit einem Feld, das vorschreibt, die Quellkonfiguration beizubehalten;
Empfangen, von der Quell-BS, einer ersten Neukonfigurationsnachricht, die ein Feld beinhaltet, das dem UE angibt, einen DAPS-Betrieb zu beenden und eine Quellkonfiguration freizugeben.

8. Verfahren nach Anspruch 7, ferner umfassend:
Empfangen, von der Basis-BS, einer zweiten Neukonfigurationsnachricht, zum Reduzieren der in Bezug auf den Quell-gNB erforderlichen UE-Fähigkeiten,
wobei die zweite Neukonfigurationsnachricht mindestens ein Feld oder Bit umfasst, das eine Verzögerung angibt, mit der das UE die empfangene Konfiguration anzuwenden hat.

9. Verfahren nach Anspruch 7, ferner umfassend:
Empfangen, von der Quell-BS, einer dritten Neukonfigurationsnachricht zum Neukonfigurieren des UE, um einen DAPS-Handover einzuleiten,
wobei die dritte Neukonfigurationsnachricht eine Angabe darüber umfasst, ob ein DAPS-Betrieb anzuwenden ist.

10. Verfahren nach Anspruch 9, wobei die dritte Neukonfigurationsnachricht mindestens eines von einem Feld oder Bit umfasst, das vorschreibt, dass das UE eine reduzierte Quellkonfiguration oder Zielkonfiguration anwenden muss, die das UE zuvor als Option zum Unterstützen von DAPS angegeben hat.

11. Verfahren nach Anspruch 7, wobei die UE-Fähigkeitsinformationen eine Trägeraggregationsfähigkeit des UE beinhalten,
wobei die UE-Fähigkeitsinformationen eine Dualkonnektivitätsfähigkeit des UE beinhalten,
wobei die DAPS-Fähigkeiten unterstützte Konfigurationen relativ zu einer aktuellen oder einer spezifischen Konfiguration definieren,
wobei die DAPS-Fähigkeiten eine für ein UE spezifische Fähigkeit umfassen,
wobei die DAPS-Fähigkeiten eine für eine Frequenzbandkombination, BC, spezifische Fähigkeit umfassen,
wobei die BC-spezifische Fähigkeit eine Merkmalssatzkombination, FSC, umfasst, die die DAPS-Fähigkeiten angibt,
wobei die UE-Fähigkeitsinformationen ein Muster für den Betrieb mittels Zeitmultiplex (TDM) umfassen und
wobei das UE ein zu Nichtträgeraggregation/Dualkonnektivität, CA/DC, fähiges UE umfasst.

12. Quellbasisstation, BS, eines Handovers mittels Dual Active Protocol Stack, DAPS, für ein Benutzergerät, UE, wobei die Quell-BS Folgendes umfasst:
einen Transceiver; und
mindestens einen Prozessor, der mit dem Transceiver gekoppelt ist, wobei der mindestens eine Prozessor konfiguriert ist zum:
Empfangen, von dem UE, von UE-Fähigkeitsinformationen, die die DAPS-Fähigkeiten beinhalten,
Übertragen, an eine Ziel-BS, einer DAPS-Handover-Anforderung für das UE, die die UE-Fähigkeitsinformationen beinhaltet,
Empfangen, von der Ziel-BS, einer Handover-Anforderungsbestätigungsnachricht, die eine ausgewählte DAPS-Konfigurationsoption beinhaltet;
Übertragen, an das UE, von Neukonfigurationsinformationen, die eine Quellkonfiguration während des DAPS beinhalten, zusammen mit einem Feld, das dem UE angibt, ein Anwenden einer derartigen reduzierten Quellkonfiguration bis zum DAPS zu verzögern;
Übertragen, an das UE, von Neukonfigurationsinformationen, die eine Zielkonfiguration beinhalten, die während des DAPS zu verwenden ist, zusammen mit einem Feld, das dem UE vorschreibt, die Quellkonfiguration beizubehalten;
Empfangen, von der Ziel-BS, einer ersten Neukonfigurationsnachricht, die ein Feld beinhaltet, das dem UE angibt, einen DAPS-Betrieb zu beenden und die Quellkonfiguration freizugeben, und
Übertragen, an das UE, der ersten Neukonfigurationsnachricht.

13. Quell-BS nach Anspruch 12, wobei der mindestens eine Prozessor ferner konfiguriert ist, um gemäß einem der Verfahren in den Ansprüchen 2 bis 6 betrieben zu werden.

14. Benutzergerät, UE, eines Handovers mittels Dual Active Protocol Stack, DAPS, bei einer drahtlosen Kommunikation, wobei das UE Folgendes umfasst:
einen Transceiver; und
mindestens einen Prozessor, der mit dem Transceiver gekoppelt ist, wobei der mindestens eine Prozessor konfiguriert ist zum:
Übertragen, an eine Quellbasisstation, BS, von UE-Fähigkeitsinformationen, die die DAPS-Fähigkeiten beinhalten,
Empfangen, von der Quell-BS, von Neukonfigurationsinformationen, die eine Quellkonfiguration während DAPS beinhalten, zusammen mit einem Feld, das dem UE angibt, ein Anwenden einer derartigen reduzierten Quellkonfiguration bis zum DAPS zu verzögern;
Empfangen, von der Quell-BS, von Neukonfigurationsinformationen, die eine Zielkonfiguration beinhalten, die während des DAPS zu verwenden ist, zusammen mit einem Feld, das dem UE vorschreibt, die Quellkonfiguration beizubehalten;
Empfangen, von der Quell-BS, einer ersten Neukonfigurationsnachricht, die ein Feld beinhaltet, das dem UE angibt, einen DAPS-Betrieb zu beenden und eine Quellkonfiguration freizugeben.

15. UE nach Anspruch 14, wobei der mindestens eine Prozessor ferner konfiguriert ist, um gemäß einem der Verfahren in den Ansprüchen 8 bis 11 betrieben zu werden.

## Revendications

1. Procédé de transfert à double pile de protocoles active, DAPS, d'un équipement utilisateur, UE, effectué par une station de base source, BS, dans une communication sans fil, le procédé comprenant :
recevoir, en provenance de l'UE, d'informations de capacité d'UE, comprenant des capacités DAPS ;
transmettre à une BS cible une demande de transfert DAPS pour l'UE, comprenant les informations de capacité d'UE ;
recevoir, depuis la BS cible, un message d'accusé de réception de demande de transfert, comprenant une option de configuration DAPS sélectionnée ;
transmettre, à l'UE, des informations de reconfiguration comprenant une configuration source pendant le DAPS, conjointement avec un champ indiquant à l'UE de retarder l'application de cette configuration source réduite jusqu'au DAPS ;
transmettre à l'UE des informations de reconfiguration comprenant une configuration cible à utiliser pendant le DAPS, conjointement avec un champ précisant que l'UE doit continuer la configuration source ;
recevoir, depuis la BS cible, un premier message de reconfiguration comprenant un champ indiquant à l'UE d'arrêter une opération DAPS et de libérer la configuration source ; et
transmettre à l'UE le premier message de reconfiguration.

2. Procédé de la revendication 1, comprenant en outre :
indiquer au gNB cible la configuration source.

3. Procédé de la revendication 1, comprenant en outre :
transmettre à l'UE un deuxième message de reconfiguration pour réduire des capacités d'UE requises par rapport au gNB source, et
dans lequel le deuxième message de reconfiguration comprend au moins l'un d'un champ ou d'un bit indiquant un délai avant que l'UE n'applique la configuration reçue.

4. Procédé de la revendication 1, comprenant en outre :
transmettre à l'UE un troisième message de reconfiguration pour reconfigurer l'UE pour qu'il initie le transfert DAPS, et
dans lequel le troisième message de reconfiguration comprend une indication précisant s'il convient d'appliquer l'opération DAPS.

5. Procédé de la revendication 4, dans lequel le troisième message de reconfiguration comprend au moins l'un de champ ou de bit précisant que l'UE doit appliquer une configuration source réduite ou une configuration cible que l'UE avait précédemment indiquée comme option pour la prise en charge du DAPS.

6. Procédé de la revendication 1, dans lequel les informations de capacité d'UE comprennent la capacité d'agrégation de porteuse de l'UE,
dans lequel les informations de capacité d'UE comprennent la capacité de double connectivité de l'UE,
dans lequel les capacités DAPS définissent des configurations prises en charge par rapport à une configuration actuelle ou spécifique,
dans lequel les capacités DAPS comprennent une capacité par UE,
dans lequel les capacités DAPS comprennent une capacité de combinaison par bande, BC,
dans lequel la capacité par BC comprend une combinaison d'ensembles de caractéristiques, FSC, indiquant les capacités DAPS,
dans lequel les informations de capacité d'UE comprennent un motif pour un fonctionnement à multiplexage par répartition dans le temps, TDM, et
dans lequel l'UE comprend un UE capable de non-agrégation de porteuse/ double connectivité, CA/DC.

7. Procédé de transfert à double pile de protocoles active, DAPS, effectué par un équipement utilisateur, UE, dans une communication sans fil, le procédé comprenant :
transmettre à une station de base, BS, source des informations de capacité d'UE comprenant des capacités DAPS,
recevoir, depuis la BS source, des informations de reconfiguration comprenant une configuration source pendant le DAPS, conjointement avec un champ indiquant de retarder l'application de cette configuration source réduite jusqu'au DAPS ;
recevoir, depuis la BS source, des informations de reconfiguration comprenant une configuration cible à utiliser pendant le DAPS, conjointement avec un champ précisant de conserver la configuration source ;
recevoir, depuis la BS source, un premier message de reconfiguration comprenant un champ indiquant à l'UE d'arrêter une opération DAPS et de libérer une configuration source.

8. Procédé de la revendication 7, comprenant en outre :
recevoir, depuis la BS source, un deuxième message de reconfiguration pour réduire des capacités d'UE par rapport au gNB source,
dans lequel le deuxième message de reconfiguration comprend au moins l'un d'un champ ou d'un bit indiquant un délai avant que l'UE n'applique la configuration reçue.

9. Procédé de la revendication 7, comprenant en outre :
recevoir, depuis la BS source, un troisième message de reconfiguration pour reconfigurer l'UE pour qu'il initie le transfert DAPS,
dans lequel le troisième message de reconfiguration comprend une indication précisant s'il convient d'appliquer l'opération DAPS.

10. Procédé de la revendication 9, dans lequel le troisième message de reconfiguration comprend au moins l'un de champ ou de bit précisant que l'UE doit appliquer une configuration source réduite ou une configuration cible que l'UE avait précédemment indiquée comme option pour la prise en charge du DAPS.

11. Procédé de la revendication 7, dans lequel les informations de capacité d'UE comprennent la capacité d'agrégation de porteuse de l'UE,
dans lequel les informations de capacité d'UE comprennent la capacité de double connectivité de l'UE,
dans lequel les capacités DAPS définissent des configurations prises en charge par rapport à une configuration actuelle ou spécifique,
dans lequel les capacités DAPS comprennent une capacité par UE,
dans lequel les capacités DAPS comprennent une capacité de combinaison par bande, BC,
dans lequel la capacité par BC comprend une combinaison d'ensembles de caractéristiques, FSC, indiquant les capacités DAPS,
dans lequel les informations de capacité d'UE comprennent un motif pour un fonctionnement à multiplexage par répartition dans le temps, TDM, et
dans lequel l'UE comprend un UE capable de non-agrégation de porteuse/ double connectivité, CA/DC.

12. Station de base source, BS, de transfert à double pile de protocoles active, DAPS, pour un équipement utilisateur, UE, la BS source comprenant
un émetteur-récepteur ; et
au moins un processeur couplé à l'émetteur-récepteur, l'au moins un processeur étant configuré pour :
recevoir, en provenance de l'UE, d'informations de capacité d'UE, comprenant des capacités DAPS,
transmettre à une BS cible une demande de transfert DAPS pour l'UE, comprenant les informations de capacité d'UE,
recevoir, depuis la BS cible, un message d'accusé de réception de demande de transfert, comprenant une option de configuration DAPS sélectionnée ;
transmettre, à l'UE, des informations de reconfiguration comprenant une configuration source pendant le DAPS, conjointement avec un champ indiquant à l'UE de retarder l'application de cette configuration source réduite jusqu'au DAPS ;
transmettre à l'UE des informations de reconfiguration comprenant une configuration cible à utiliser pendant le DAPS, conjointement avec un champ précisant que l'UE doit continuer la configuration source ;
recevoir, depuis la BS cible, un premier message de reconfiguration comprenant un champ indiquant à l'UE d'arrêter une opération DAPS et de libérer la configuration source, et
transmettre à l'UE le premier message de reconfiguration.

13. BS source de la revendication 12, dans laquelle l'au moins un processeur est en outre configuré pour fonctionner selon l'un de procédés des revendications 2 à 6.

14. Équipement utilisateur, UE, de transfert à double pile de protocoles active, DAPS, dans une communication sans fil, l'UE comprenant :
un émetteur-récepteur ; et
au moins un processeur couplé à l'émetteur-récepteur, l'au moins un processeur étant configuré pour :
transmettre à une station de base, BS, source des informations de capacité d'UE comprenant des capacités DAPS,
recevoir, depuis la BS source, des informations de reconfiguration comprenant une configuration source pendant le DAPS, conjointement avec un champ indiquant de retarder l'application de cette configuration source réduite jusqu'au DAPS ;
recevoir, depuis la BS source, des informations de reconfiguration comprenant une configuration cible à utiliser pendant le DAPS, conjointement avec un champ précisant de conserver la configuration source ;
recevoir, depuis la BS source, un premier message de reconfiguration comprenant un champ indiquant à l'UE d'arrêter une opération DAPS et de libérer une configuration source.

15. UE selon la revendication 14, dans lequel l'au moins un processeur est en outre configuré pour fonctionner selon l'un des procédés des revendications 8 à 11.
